# EUROPÄISCHE PATENTANMELDUNG

(11) **EP 4 591 701 A1**
(43) Veröffentlichungstag der Anmeldung: **30.07.2025**
(21) Anmeldenummer: 25151953.4
(22) Anmeldetag: 15.01.2025
(51) Int. Cl.: A01G 23/04, A01G 25/00

(54) **VERFAHREN ZUR HERSTELLUNG EINER AUFFANGANORDNUNG FÜR SICKER- ODER GRUNDWASSER**

(30) Priorität: 25.01.2024 DE 102024102122
(71) Anmelder: Manis, Bernd, 75443 Ötisheim (DE)
(72) Erfinder: Manis, Bernd, 75443 Ötisheim (DE)
(74) Vertreter: Wacker, Jost Oliver

(57) **Zusammenfassung**

Bei einem Verfahren zur Herstellung einer in einen Boden (4) eingelassenen Auffanganordnung (2) für Sicker- oder Grundwasser in einer Wasseraufnahmezone (12) einer Bepflanzung (6), wird in einem Aushubschritt eine Grube (20) durch Entnahme eines Aushubs (18) aus der Wasseraufnahmezone (12) hergestellt, in einem Abdichtungsschritt ein Rückstaubereich (10) an einem Grubenboden (22) der Grube (20) hergestellt, der sich wenigstens teilweise in der Wasseraufnahmezone (12) erstreckt und in dem das Sicker- oder Grundwasser wenigstens zeitweise rückgestaut werden kann, und in einem Verfüllschritt die Grube (20) wieder verfüllt, wobei im Aushubschritt der Grubenboden (22) wannenförmig ausgebildet wird und im Abdichtungsschritt der Rückstaubereich (10) durch Anbringung eines wasserdurchtrittshemmenden Materials (8) am Grubenboden (22) hergestellt wird. Dabei ist vorgesehen, dass das wasserdurchtrittshemmende Material (8) durch Einsetzen einer komplementär zum wannenförmigen Grubenboden (22) vorgeformten und aus einem Metallblech gebildeten Wanne (30) gebildet wird.

## Beschreibung

Die Erfindung betrifft ein Verfahren zur Herstellung einer in einen Boden eingelassenen Auffanganordnung für Sickerwasser beziehungsweise Grundwasser in einer Wasseraufnahmezone einer Bepflanzung, das insbesondere durch in den Boden einsickerndes Regenwasser oder Wasser einer manuellen oder automatisierten Bewässerung oder durch kurzzeitige Grundwasseranstiege als eine Art Schichtenwasser entsteht, nach dem Oberbegriff des Anspruchs 1 sowie eine in einem solchen Verfahren hergestellte Auffanganordnung. Die Wasseraufnahmezone erstreckt sich dabei über einen Bereich des Bodens, in dem für die vorhandene oder vorgesehene Bepflanzung eine Wasseraufnahme über die Wurzeln der Bepflanzung erfolgt. Das Herstellungsverfahren sieht dabei vor, dass in einem Aushubschritt eine Grube durch Entnahme eines Aushubs aus der Wasseraufnahmezone hergestellt wird, wobei sich die Grube vollständig innerhalb der Wasseraufnahmezone erstrecken kann oder sich nach unten hin über diese hinaus erstreckt. In einem Abdichtungsschritt wird dann an einem Grubenboden der Grube ein Rückhalte- beziehungsweise Rückstaubereich hergestellt, der sich wenigstens teilweise in der Wasseraufnahmezone erstreckt und durch den das eintretende Sicker- oder Grundwasser wenigstens zeitweise rückgestaut beziehungsweise gespeichert werden kann. In einem Verfüllschritt wird die Grube mit dem darin vorgesehenen Rückstaubereich wieder mit dem Aushub und/oder einem Aastauschbodenmaterial verfüllt. Dabei wird im Aushubschritt der Grubenboden wannenförmig ausgebildet und im Abdichtungsschritt der Rückstaubereich durch Anbringung eines wasserdurchtrittshemmenden Materials am Grubenboden hergestellt.

Aus DE 0692597 A ist ein Verfahren zur Herstellung einer Auffanganordnung für Grundwasser bekannt. Dabei wird eine unterhalb der Wurzeln einer Bepflanzung liegende undurchlässige Bodenschicht mit einer Umfassungsmauer versehen. Die undurchlässige Bodenschicht und die Umfassungsmauer bilden dadurch eine Wanne, in der Sickerwasser aus Niederschlägen zurückgehalten und der Wasserspiegel unterhalb der Wurzeln auf eine gewünschte Höhe eingestellt werden kann.

Nachteilig an dem bekannten Herstellungsverfahren ist, dass sowohl die erforderlichen Aushubarbeiten als auch die Errichtung der im Boden eingelassenen Wanne relativ zeit- und kostenaufwändig sind.

DE 10 2006 047 028 A1 beschreibt dabei ein allseits geschlossenes Behältnis, in dem eine Nährstoffmischung sowie eine mit einem Wasserschlauch verbundene Tropfeinrichtung aufgenommen ist. Eine Oberseite des Behältnisses ist dabei porös oder mit Öffnungen versehen, so dass Wasser nach oben in das Erdreich abgegeben wird und Wurzeln einer darüber angeordneten Pflanze in das Behältnis eindringen können. Das Behältnis kann dabei Quader, Kissen oder Sackförmig ausgebildet und aus einem festen oder flexiblen Material hergestellt sein. Das Behältnis wird vorab mit einem Granulat oder in körniger Form befüllt und anschließend am Boden eines Pflanzloches platziert.

Die Aufgabe der Erfindung ist es, bei einem gattungsgemäßen Verfahren zur Herstellung einer Auffanganordnung für Sicker- und/oder Grundwasser die genannten Nachteile zu vermeiden und eine einfache und kostengünstige Herstellung zu ermöglichen.

Diese Aufgabe wird durch ein Verfahren mit den Merkmalen des Anspruchs 1 gelöst. Dabei wird das wasserdurchtrittshemmende Material durch Einsetzen einer komplementär zum wannenförmigen Grubenboden vorgeformten und aus einem Metallblech gebildeten Wanne gebildet. Das heißt, dass das Metallblech eine vorgeformte konvexe Außenseite bildet, die an eine beim Aushub der Grube hergestellte wannenförmige beziehungsweise konkave Formgebung des Grubenbodens angepasst ist. Die Wanne kann dabei vorzugsweise nahtfrei aus dem Metallblech hergestellt sein, wie beispielsweise durch einen Kaltumformungsprozess, wie insbesondere Drücken oder Tiefziehen. Durch ein solches Einsetzen einer komplementär zum Grubenboden vorgeformten Wanne in eine entsprechend geformte Grube mit einem passend zur Wanne geformten Grubenboden kann der Rückstaubbereich in einer exakt vorbestimmten Form hergestellt werden. Die Verwendung eines Metallblechs ermöglicht dabei sowohl eine einfache Vor- als auch Nachverformung des wasserdurchtrittshemmenden Materials zur Anpassung an die Form des Grubenbodens und eine besonders einfache Handhabung beim Einbau in die Grube. Auf diese Weise ist eine besonders einfache und schnelle Herstellung des Rückstaubereichs möglich. Das wasserdurchtrittshemmende Material ist dabei in jedem Fall durch ein zusammenhängendes und verformbares Teil gebildet und kann somit besonders einfach in die Grube eingebaut und an die Form des wannenförmigen Aushubbodens angepasst werden. Das wasserdurchtrittshemmende Material kann hierzu gegenüber dem zu sammelnden Sicker- oder Grundwasser vollständig undurchlässig ausgebildet sein. Alternativ hierzu kann das wasserdurchtrittshemmende Material auch lediglich eingeschränkt durchlässig sein, so dass nur ein Teil des anfallenden Sickerbeziehungsweise Grundwassers rückgestaut und zeitweise gespeichert wird, um die Wasseraufnahmezone mit ausreichend Wasser versorgen zu können. Die Ausbildung einer Wannenform am Grubenboden der hergestellten Grube und die anschließende Anbringung des wasserdurchtrittshemmenden Materials an dem derart wannenförmig vorgeformten Grubenboden ermöglicht dabei eine besonders einfache und kostengünstige Ausbildung des gewünschten Rückstaubbereichs mit einer vorbestimmten Dichtigkeit beziehungsweise Durchlässigkeit hinsichtlich des rückgestauten beziehungsweise gespeicherten Sicker- oder Grundwassers. Hierdurch kann beispielsweise eine Vielzahl von Auffanganordnungen relativ einfach uns kostengünstig hergestellt werden, um auch großflächig eine Art künstlichen Grund- beziehungsweise Schichtenwasserspiegel einzurichten, der in einer Wasseraufnahmezone einer vorgesehenen Bepflanzung angeordnet ist. Auf diese Weise kann eine verbesserte Wasseraufnahme der betreffenden Bepflanzung sichergestellt werden, wie beispielsweise auf einem landwirtschaftlich genutzten Feld.

Dabei ist es günstig, wenn im Aushubschritt der Aushub mittels eines Aushubgerätes erfolgt, das in einer Greifbewegung entlang einer Wannenkontur verlagert wird. Hierdurch kann die Form des Aushubgerätes und die Kontur der damit herzustellenden Grube an eine gewünschte Form des herzustellenden Rückstaubereichs angepasst werden. Insbesondere kann die Grube auf diese Weise in einer Wannenform hergestellt werden, die der Form einer darin einsetzbaren vorgeformten Wanne beziehungsweise eines vorgeformten wasserdurchtrittshemmenden Materials entspricht. Hierdurch kann das vorgeformte wasserdurchtrittshemmende Material beziehungsweise die Wanne direkt nach Herstellung der Grube am Grubenboden eingesetzt werden, wodurch eine exakte Anpassung des wasserdurchtrittshemmenden Materials an die Form des Grubenbodens gewährleistet werden kann.

Bevorzugterweise wird im Aushubschritt das mit dem Aushub gefüllte Aushubgerät angehoben und im Abdichtungsschritt das wasserdurchtrittshemmende Material unter dem angehobenen Aushubgerät am Grubenboden positioniert. Anschließend wird im Verfüllschritt das Aushubgerät geöffnet und dadurch das wasserdurchtrittshemmende Material durch den austretenden Aushub in die Wannenform gedrückt und in dieser fixiert. Hierdurch wird eine besonders einfache und kostengünstige Herstellung des Rückstaubereichs ermöglicht.

Vorteilhafterweise wird im Aushubschritt der Aushub mittels einer Rundspatenmaschine entnommen. Hierdurch kann im Aushubschritt sowohl das eigentliche Aushubmaterial der Grube als auch eine bereits vorhandene Bepflanzung entnommen werden, wie beispielsweise ein Baum. Zudem kann ohne wesentliche manuelle Nachbearbeitung eine besonders geeignete Wannenform des Grubenbodens maschinell hergestellt werden.

Alternativ hierzu wird im Aushubschritt der Aushub mittels eines Bohrgerätes entnommen, wodurch die Grube beziehungsweise der Grubenboden zumindest bereichsweise zylindrisch oder kegelförmig und besonders kostengünstig hergestellt werden kann.

Ferner wird die oben genannte Aufgabe durch eine Auffanganordnung für Sicker- oder Grundwasser gelöst, die in einem Verfahren in einer der oben beschriebenen Ausführungsformen hergestellt ist, wobei das wasserdurchtrittshemmende Material des Rückstaubereichs am Grubenboden wannenförmig beziehungsweise schalenförmig aus Metall vorgeformt ist. Durch die Wannen- oder Schalenform kann dabei ein Rückstaubereich definiert werden, in dem das zurückgehaltene Sicker- beziehungsweise Grundwasser über einen gewissen Zeitraum gespeichert und der darüber angeordneten Bepflanzung zur Verfügung gestellt werden kann. Durch die Herstellung des wasserdurchtrittshemmenden Materials aus vorgeformtem Metall wird eine einfache Handhabung und eine einfache Anpassung der Form an die jeweils zugeordnete Grube beziehungsweise deren Grubenboden ermöglicht.

In einer besonders bevorzugten Ausführungsform bildet das wasserdurchtrittshemmende Material einen Überlauf, der einen vertikalen Abstand zu einer maximalen Wurzeltiefe der Bepflanzung aufweist. Durch eine derartige vertikal beabstandete Anordnung des Überlaufs des durch das wasserdurchtrittshemmende Material gebildeten Rückstaubereichs unterhalb der zu erwartenden Wurzeltiefe der Bepflanzung kann eine schädliche dauerhafte Vernässung im Bereich der Wurzeln vermieden werden.

Zudem ist es günstig, wenn das wasserdurchtrittshemmende Material eine sich nach unter verjüngende Wannenform bildet, um den entsprechenden Aushub überwiegend maschinell entnehmen zu können.

In einer besonders bevorzugten Ausführungsform ist der Rückstaubereich ausschließlich durch verrottbares Material gebildet, um nach dem Ablauf einer Verwendungszeit der Auffanganordnung eine im Wesentlichen rückstandsfreie Verrottung des wasserdurchtrittshemmenden Materials gewährleisten zu können.

Es wird darauf hingewiesen, dass alle oben beschriebenen Merkmale des erfindungsgemäßen Gegenstandes untereinander austauschbar beziehungsweise kombinierbar sind, sofern ein Austausch oder eine Kombination derselben aus technischen Gründen nicht ausgeschlossen ist.

In den Figuren ist eine beispielhafte Ausführungsform der Erfindung dargestellt. Es zeigen:
- Figur 1: eine geschnittene Ansicht einer erfindungsgemäßen Auffanganordnung,
- Figur 2: eine geschnittene Ansicht der Auffanganordnung während eines Aushub schrittes,
- Figur 3: eine geschnittene Ansicht der Auffanganordnung während eines Abdichtungsschrittes,
- Figur 4: eine geschnittene Ansicht der Auffanganordnung nach einem Verfüllschritt,
- Figur 5: eine geschnittene Ansicht der Auffanganordnung während eines Aushubschrittes mit einem Bohrgerät und
- Figur 6: eine geschnittene Ansicht der Auffanganordnung während eines Aushubschrittes mit einer Rundspatenmaschine.

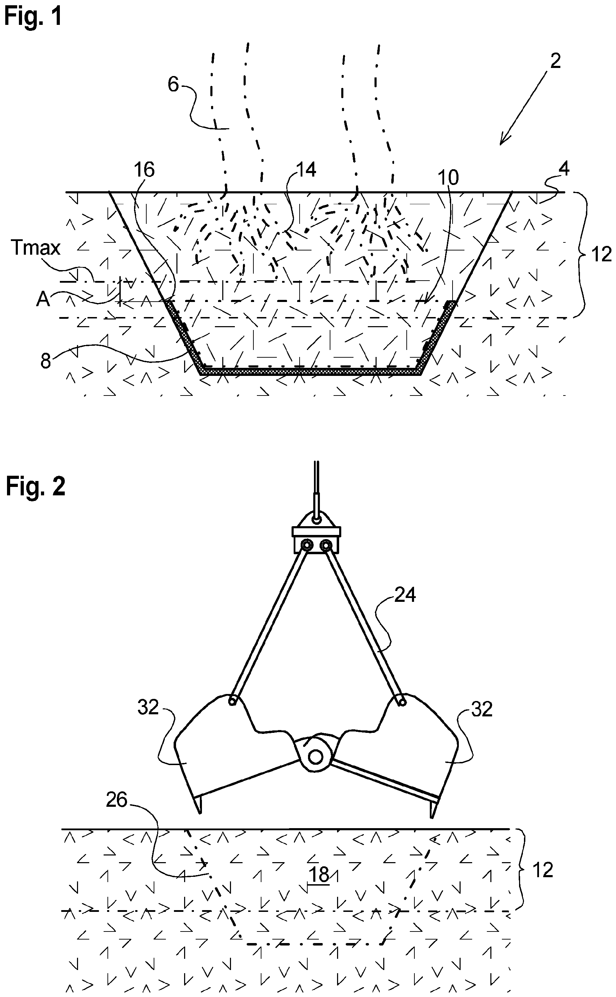

Fig. 1 zeigt eine Auffanganordnung 2 zum Rückstauen beziehungsweise Speichern von Sicker- und/oder Grundwasser in einem Boden 4 zur Versorgung einer vorhandenen oder vorgesehenen Bepflanzung 6, das insbesondere durch in den Boden einsickerndes Regenwasser oder Wasser einer manuellen oder automatisierten Bewässerung oder durch kurzzeitige Grundwasseranstiege als eine Art Schichtenwasser entsteht,. Die Auffanganordnung 2 weist hierzu ein wasserdurchtrittshemmendes Material 8 auf, das einen Rückstaubereich 10 nach unten und seitlich begrenzt, in dem das anfallende Sicker- und/oder Grundwasser als Schichten beziehungsweise Stauwasser zweitweise angestaut beziehungsweise gespeichert werden kann. Der Rückstaubereich 10 ist hierbei derart im Boden 4 positioniert, dass er sich wenigstens teilweise in einer Wasseraufnahmezone 12 erstreckt, in der die bestehende oder vorgesehene Bepflanzung 6 über Wurzeln 14 Feuchtigkeit beziehungsweise Wasser aus dem Boden aufnehmen kann.

Wie aus Figur 1 zu entnehmen ist, bildet das wasserdurchtrittshemmende Material 8 hierbei einen Überlauf 16, der einen vertikalen Abstand A zu einer maximalen Wurzeltiefe T der Bepflanzung 6 aufweist. Auf diese Weise kann eine für die Bepflanzung schädliche dauerhafte Vernässung im Bereich der Wurzeln 14 vermieden werden.

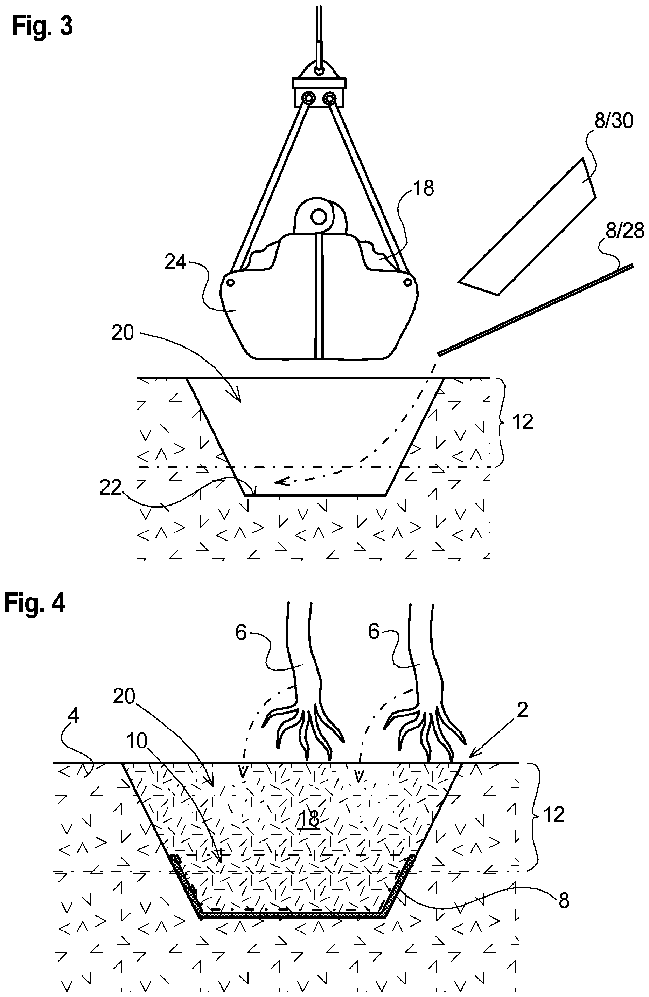

Wie aus den Figuren 2 und 3 zu entnehmen ist, wird zur Herstellung der Auffanganordnung 2 in dem für die Bepflanzung 6 vorgesehenen Bereich in einem Aushubschritt durch Entnahme eines Aushubs 18 aus der Wasseraufnahmezone 12 zunächst eine Grube 20 hergestellt. Vorzugsweise kann der Aushub 18, wie in Figur 2 dargestellt, beispielsweise mittels eines Aushubgerätes 24 entnommen werden, das in einer Aushubbewegung entlang einer Wannenkontur 26 verlagert wird. Die hierbei hergestellte Grube 20 wird, wie aus Figur 3 zu entnehmen ist, nach unten durch einen Grubenboden 22 begrenzt, der sich somit wannen- beziehungsweise schalenförmig erstreckt beziehungsweise nach unten verjüngt und somit eine konkave Formgebung aufweist.

In einem nachfolgenden Abdichtungsschritt wird dann das wasserdurchtrittshemmende Material 8 gemäß Figur 3 in einem unteren Abschnitt der Grube 20 an den Grubenboden 22 angelegt, um den Rückstaubereich 10 zu bilden. Das wasserdurchtrittshemmende Material 8 ist hierbei beispielsweise durch ein flächiges Material 28 gebildet, das komplementär zur Wannenform des Grubenbodens 20, das heißt bezüglich seiner am Grubenboden 20 angelegten Außenseite konvex verformt werden kann. Beispielsweise kann das flächige Material 28 durch ein Metallblech gebildet sein, das hinsichtlich des anfallenden Sicker- oder Grundwassers vollständig undurchlässig oder nur teilweise durchlässig ist. Alternativ kann das wasserundurchlässige Material 8 auch durch ein vorgeformte Wanne 30 gebildet sein, die komplementär zur Kontur des Grubenbodens 22 ausgebildet ist. Auch die vorgeformte Wanne 30 kann beispielsweise aus einem Metallblech gebildet sein. Das Metallblech bildet dabei eine vorgeformte konvexe Außenseite, die an die beim Aushub der Grube 20 hergestellte wannenförmige beziehungsweise konkave Formgebung des Grubenbodens 22 angepasst ist. Die Wanne 30 kann dabei vorzugsweise nahtfrei aus dem Metallblech hergestellt sein, wie beispielsweise durch einen Kaltumformungsprozess, wie insbesondere Drücken oder Tiefziehen. In jedem Fall wird im Abdichtungsschritt am Grubenboden 20 eine schalenbeziehungsweise wannenförmige Wandung gebildet, in der ein von oben eintretendes Grund- oder Sickerwasser aufgestaut werden kann. Vorzugsweise wird dabei sowohl für das flächige Material 28 als auch für die Wanne 30 ein wasserdurchtrittshemmendes Material 8 verwendet, das nach einer vorbestimmten Verwendungsdauer verrottet, um dauerhafte Rückstände im Boden 4 zu vermeiden.

In einem dem Abdichtungsschritt nachfolgenden Verfüllschritt wird die Grube 20 zusammen mit dem durch das wasserdurchtrittshemmenden Material 8 gebildeten Rückstaubereich 10 wieder mit dem zuvor entnommenen Aushub 18 und/oder durch Austauscherde verfüllt. Hiernach steht der Boden 4 bereit, um oberhalb des Rückstaubereichs 10 der auf diese Weise hergestellten Auffanganordnung 2 die Bepflanzung 6 aufnehmen zu können.

Gemäß der Figuren 2 kann das Aushubgerät 24 beispielhaft durch einen Zweischalengreifer gebildet sein, dessen beide Löffel 32 im Aushubschritt in einer Greifbewegung entlang der Wannenkontur 26 verlagerbar sind, um den Grubenboden 22 mit der vorgesehenen Wannenform ausbilden zu können. Zudem ermöglicht der Zweischalengreifer gemäß Figur 3 während des Abdichtungsschrittes ein bloßes Anheben des Aushubes 18 über der Grube 20. Hierdurch kann das wasserdurchtrittshemmende Material 8 an den Grubenboden 22 angelegt und anschließend der Aushub 18 direkt wieder in die Grube 20 eingefüllt werden, um das wasserdurchtrittshemmende Material 8 in der eingebauten Position zu fixieren. Auf diese Weise ermöglicht der Zweischalengreifer eine besonders schnelle Herstellung der Auffanganordnung 2.

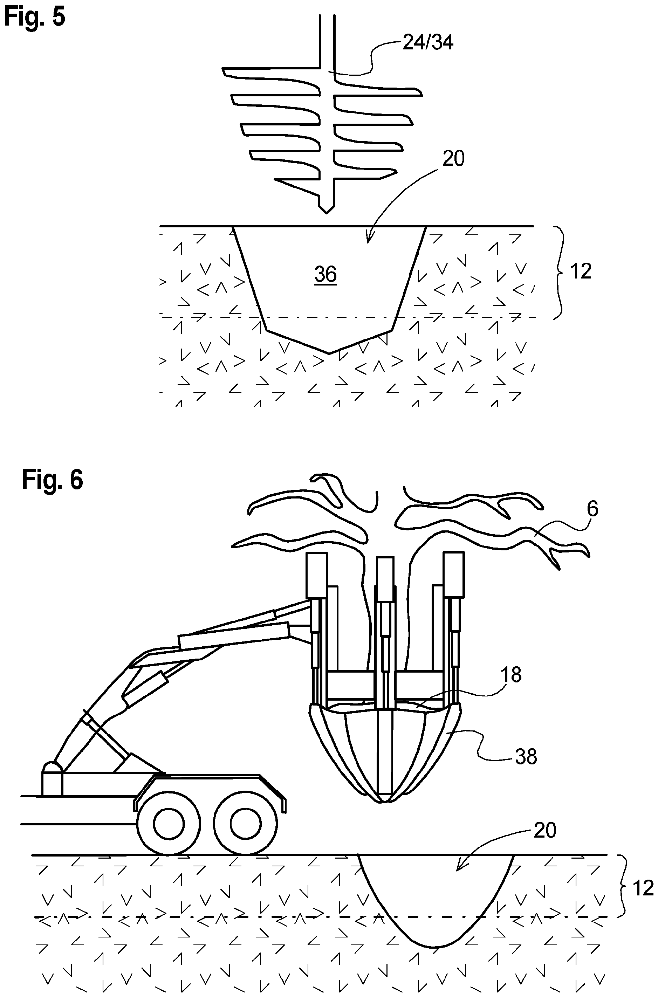

Alternativ hierzu kann das Aushubgerät 24 gemäß Figur 5 durch ein Bohrgerät 34 gebildet sein, mittels dem die Grube 20 im Aushubschritt in Form eines wannenförmigen Bohrloches 36 hergestellt werden kann.

Ferner kann das Aushubgerät 24 gemäß Figur 6 alternativ durch eine Rundspatenmaschine 38 gebildet sein. Diese ermöglicht im Falle eines Bodens 4 mit einer bereits vorhandenen Bepflanzung 6 im Aushubschritt sowohl die Entnahme des Aushubs 18 als auch der Bepflanzung 6, wie beispielsweise in Form eines Baumes. Die hierbei im Aushubschritt entstehende wannenförmige Grube 20 kann dabei nach dem Abdichtungsschritt sowohl mit dem Aushub als auch mit der darin verwurzelten Bepflanzung 6 wieder verfüllt werden.

Hierdurch kann beispielsweise relativ einfach und kostengünstig eine Vielzahl von Auffanganordnungen 2 hergestellt werden, um auch großflächig eine Art künstlichen Grund- beziehungsweise Schichtenwasserspiegel einzurichten, der in der Wasseraufnahmezone 12 der vorgesehenen Bepflanzung 6 angeordnet ist. Auf diese Weise kann eine verbesserte Wasseraufnahme der betreffenden Bepflanzung 6 sichergestellt werden, wie beispielsweise auf einem landwirtschaftlich genutzten Feld.

Es wird darauf hingewiesen, dass alle oben beschriebenen Elemente und Merkmale der verschiedenen Ausführungsformen des erfindungsgemäßen Gegenstandes untereinander austauschbar beziehungsweise kombinierbar sind, sofern ein Austausch oder eine Kombination derselben aus technischen Gründen nicht ausgeschlossen ist.

## Patentansprüche

1. Verfahren zur Herstellung einer in einen Boden (4) eingelassenen Auffanganordnung (2) für Sicker- oder Grundwasser in einer Wasseraufnahmezone (12) einer Bepflanzung (6), bei dem
in einem Aushubschritt eine Grube (20) durch Entnahme eines Aushubs (18) aus der Wasseraufnahmezone (12) hergestellt wird,
in einem Abdichtungsschritt ein Rückstaubereich (10) an einem Grubenboden (22) der Grube (20) hergestellt wird, der sich wenigstens teilweise in der Wasseraufnahmezone (12) erstreckt und in dem das Sicker- oder Grundwasser wenigstens zeitweise rückgestaut werden kann, und
einem Verfüllschritt, in dem die Grube (20) wieder verfüllt wird,
wobei im Aushubschritt der Grubenboden (22) wannenförmig ausgebildet wird und im Abdichtungsschritt der Rückstaubereich (10) durch Anbringung eines wasserdurchtrittshemmenden Materials (8) am Grubenboden (22) hergestellt wird,
**dadurch gekennzeichnet, dass** das wasserdurchtrittshemmende Material (8) durch Einsetzen einer komplementär zum wannenförmigen Grubenboden (22) vorgeformten und aus einem Metallblech gebildeten Wanne (30) gebildet wird.

2. Verfahren nach Anspruch 1, **dadurch gekennzeichnet, dass** im Aushubschritt der Aushub (18) mittels einer Aushubgerätes (24) erfolgt, das in einer Greifbewegung entlang einer Wannenkontur (26) verlagert wird.

3. Verfahren nach Anspruch 1 oder 2, **dadurch gekennzeichnet, dass** im Aushubschritt das mit dem Aushub (18) gefüllte Aushubgerät (24) angehoben und im Abdichtungsschritt das wasserdurchtrittshemmende Material (8) unter dem angehobenen Aushubgerät (24) am Grubenboden (22) positioniert wird sowie im Verfüllschritt das wasserdurchtrittshemmende Material (8) durch den aus dem Aushubgerät (24) austretenden Aushub (18) in der Wannenform fixiert wird.

4. Verfahren nach einem der Ansprüche 1 bis 3, **dadurch gekennzeichnet, dass** im Aushubschritt der Aushub (18) mittels einer Rundspatenmaschine (38) entnommen wird.

5. Verfahren nach einem der Ansprüche 1 bis 4, **dadurch gekennzeichnet, dass** im Aushubschritt der Aushub (18) mittels eines Bohrgerätes (34) entnommen wird.

6. Auffanganordnung zum Rückstauen oder Speichern von Sicker- oder Grundwasser, hergestellt in einem Verfahren nach einem der Ansprüche 1 bis 5, **dadurch gekennzeichnet, dass** das wasserdurchtrittshemmende Material (8) des Rückstaubereichs (10) am Grubenboden (22) wannenförmig aus Metall vorgeformt ist.

7. Auffanganordnung nach Anspruch 6, **dadurch gekennzeichnet, dass** das wasserdurchtrittshemmende Material (8) einen Überlauf (16) bildet, die einen vertikalen Abstand (A) zu einer maximalen Wurzeltiefe (T) der Bepflanzung (6) aufweist.

8. Auffanganordnung nach Anspruch 6 oder 7, **dadurch gekennzeichnet, dass** das wasserdurchtrittshemmende Material (8) eine sich nach unten verjüngende Wannenform bildet.

9. Auffanganordnung nach einem der Ansprüche 6 bis 8, **dadurch gekennzeichnet, dass** der Rückstaubereich (10) ausschließlich durch verrottbares Material gebildet ist.
